# EUROPÄISCHE PATENTSCHRIFT

(11) **EP 0 809 056 B1**
(45) Veröffentlichungstag und Bekanntmachung des Hinweises auf die Patenterteilung: **23.07.2003**
(21) Anmeldenummer: 97108246.6
(22) Anmeldetag: 21.05.1997
(51) Int. Cl.: F16K 27/04

(54) **Sanitärarmatur**
Sanitary fitting
Armature sanitaire

(30) Priorität: 21.05.1996 DE 19620283
(43) Veröffentlichungstag der Anmeldung: 26.11.1997
(73) Patentinhaber: Hansgrohe AG, 77761 Schiltach (DE)
(72) Erfinder: Ginter, Gerhard, 78144 Tennenbron (DE)
(74) Vertreter: Patentanwälte Ruff, Wilhelm, Beier, Dauster & Partner

(56) Entgegenhaltungen:
- EP-A- 0 375 475
- EP-A- 0 681 127
- DE-A- 3 513 840
- DE-A- 4 421 387
- DE-A- 4 438 647
- DE-A- 4 443 895

## Beschreibung

Die Erfindung geht aus von einer Sanitärarmatur mit einem Armaturenkörper, in dem ein Aufnahmeraum zur Aufnahme eines Ventilsystems, insbesondere einer Mischkartusche, gebildet ist.

Üblicherweise wird der Aufnahmeraum durch einen festen gegossenen Boden begrenzt, der in der Regel Teil des Armaturengrundkörpers ist. Durch diesen festen Boden werden die Rohre angeschraubt, angelötet oder eingesteckt. Auf dem Boden liegt ggf. unter Zwischenlage einer Adapterplatte das Ventilsystem auf.

Es ist bereits eine Sanitärarmatur bekannt (DE-A1-35 13 840), bei der ein in den Armaturenkörper einsetzbarer Boden zur Anbringung von Zuleitungen und zur Anbringung einer Gewindestange dient. Mit dieser Gewindestange wird der Armaturenkörper an einer Unterlage festgespannt.

Weiterhin bekannt ist eine Sanitärarmatur, die einen fest in dem Armaturengrundkörper eingeschweißten Boden mit daran angeschweißten Ansätzen zur Anbringung von Zuleitungen aufweist (DE-A1-44 38 647).

Weiterhin bekannt sind Mischbatterien, bei denen der Boden einstückiger Teil des Grundkörpers ist (DE-A1-44 21 387, DE-A1-44 43 895, EP-A1-681 127).

Der Erfindung liegt die Aufgabe zugrunde, eine Möglichkeit zu schaffen, den Armaturengrundkörper, der üblicherweise aus Guß besteht, zu vereinfachen.

Zur Lösung dieser Aufgabe schlägt die Erfindung eine Sanitärarmatur mit den im Anspruch 1 genannten Merkmalen vor. Weiterbildungen der Erfindung sind Gegenstand von Unteransprüchen.

Durch die getrennte Herstellung des Bodens, der eine sehr einfache geometrische Form aufweisen kann, vereinfacht sich die Herstellung. Der Armaturenkörper braucht zur Festlegung des Bodens nur kleine Vorsprünge aufzuweisen, so daß der Armaturenkörper ebenfalls einfacher herzustellen ist. Insbesondere ist es auch möglich, durch unterschiedliche Böden einen Armaturengrundkörper für unterschiedliche und in ihren Abmessungen verschiedene Ventilsysteme zu verwenden.

Bei der Montage wird beispielsweise zunächst der Boden in den Armaturenkörper eingesetzt und anschließend das Ventilsystem, bei dem es sich um eine standardisierte Mischerkartusche handeln kann. Zur Festlegung des Bodens kann es ausreichen, wenn dieser an Anlagenoppen anliegt und durch das Festlegen der Mischerkartusche ebenfalls mit festgelegt wird.

Erfindungsgemäß kann in Weiterbildung vorgesehen sein, daß der Boden den Aufnahmeraum abschließt. Er kann beispielsweise an einzelnen oder durchgehenden schmalen Vorsprüngen anliegen.

Es kann erfindungsgemäß ebenfalls vorgesehen sein, daß der Boden eine Auflagefläche für das Ventilsystem bildet, beispielsweise insbesondere für die erwähnte Endfläche des Ventilsystems, in dem die mindestens eine Wasserdurchtrittsöffnung ausmündet.

Das Wasser gelangt beispielsweise von einer Zuleitung durch den Boden zu der Öffnung des Ventilsystems. Je nach Ausbildung des Ventilsystems kann auch das das Ventilsystem verlassende Wasser durch den Boden hindurchgeführt werden.

Die Erfindung schlägt vor, daß an den mindestens einen Durchgang des Bodens eine Anschlußleitung anschließbar sein kann. Es ist beispielsweise denkbar, daß der Boden einen Nippel zum Anschluß einer Anschlußleitung, beispielsweise einen Schraubanschluß aufweist. In diesem Fall kann der Durchgang des Bodens direkt mit der Wasseraustrittsöffnung des Ventilsystems in Verbindung stehen.

Die Erfindung schlägt vor, daß in den Durchgang des Bodens eine mit einem Nippel versehene Anschlußleitung einsetzbar ist. Dann geschieht die Wasserführung von der mit dem Nippel versehenen Anschlußleitung direkt zu dem Ventilsystem, wobei eine Abdichtung zwischen dem Nippel und dem Ventilsystem vorgesehen wird.

Erfindungsgemäß kann vorgesehen sein, daß der Nippel über die dem Ventilsystem zugewandte Fläche des Bodens vorspringt und in eine Öffnung des Ventilsystems eingreift. Auch hier kann eine Abdichtung zwischen dem Nippel und dem Ventilsystem vorgesehen sein,

Insbesondere kann vorgesehen sein, daß der vorspringende Nippel eine Ausrichtung des Ventils bewirkt.

Es ist ebenfalls denkbar, daß das Ventilsystem einen Vorsprung aufweist, der nippelartig in den Durchgang oder eine den Durchgang umgebende Vertiefung des Bodens eingreift.

Der Nippel kann am Ende einer Rohrleitung angeordnet sein, also beispielsweise einem Kupferrohr, das üblicherweise zum Anschluß von Sanitärarmaturen dient.

Ebenfalls kann vorgesehen sein, daß der Nippel am Ende eines Zuleitungsschlauches angeordnet ist. Dies ist insbesondere bei komplizierteren Formen sinnvoll, da dann der Schlauch von der Seite der Armatur durch die Öffnung des Elementes, an dem die Sanitärarmatur befestigt werden soll, eingesteckt und eingefädelt werden kann.

Diese Lösung ist insbesondere dann von Vorteil, wenn, wie die Erfindung weiterhin vorschlägt, der Boden durch die gleiche Öffnung in den Aufnahmeraum des Armaturenkörpers einsetzbar ist, durch den auch das Ventilsystem eingesetzt wird.

Es ist jedoch ebenfalls möglich und wird von der Erfindung in Weiterbildung vorgeschlagen, dass der Boden seitlich in den Aufnahmeraum, in dem er angeordnet sein soll, einschiebbar ist.

Erfindungsgemäß kann vorgesehen sein, dass der Boden eine Durchführung für das das Mischsystem verlassende Mischwasser aufweist. Diese Durchführung kann entweder den Boden in einer ähnlichen Richtung durchqueren wie die Zuleitung, d. h. von der einen Stirnfläche zu der anderen Stirnfläche. Es ist aber ebenfalls möglich, dass die Durchführung für das Mischwasser den Boden seitlich verlässt, also bei einem zylindrischen Aufnahmeraum in der Mantelfläche des Bodens.

Der Boden kann in seiner einfachsten Ausführung etwa scheibenförmig mit ebenen Begrenzungsflächen ausgebildet sein.

Es ist aber ebenfalls möglich, den Boden aus zwei oder mehr miteinander verbindbaren Teilen aufzubauen. Dies kann fertigungstechnische Vorteile haben. Auch in diesem Fall ist der boden ein getrenntes, fabrikmäßig herstellbares und zusammensetzbares Bauteil der Sanitärarmatur.

Erfindungsgemäß ist vorgesehen, dass die zu einem Auslauf der Armatur führende Auslaufleitung einstückig mit dem Boden bzw. mit einem der mehreren Teile des Bodens ausgebildet ist.

Die Erfindung schlägt vor, die Zuleitungen und den Boden sowie ggf. auch die Auslaufleitungen vorkonfektioniert herzustellen.

In Weiterbildung der Erfindung kann vorgesehen sein, dass das Ventilsystem an dem Boden fixiert ist, der seinerseits an dem Armaturengrundkörper fixierbar ist.

Um die durch die einfachere Herstellung des Armaturenkörpers verringerten Kosten nochmals weiter zu verringern, kann erfindungsgemäß vorgesehen sein, den Boden aus Kunststoff herzustellen.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: einen Teilschnitt durch eine Sanitärarmatur;
- Fig. 2: in vergrößertem Maßstab eine teilweise geschnittene Seitenansicht des Bodens mit einer mit einem Nippel versehenen Anschlussleitung;
- Fig. 3: einen Schnitt durch eine weitere Sanitärarmatur nach der Erfindung;
- Fig. 4: einen Schnitt durch eine nochmals weitere Ausführungsform einer Sanitärarmatur.

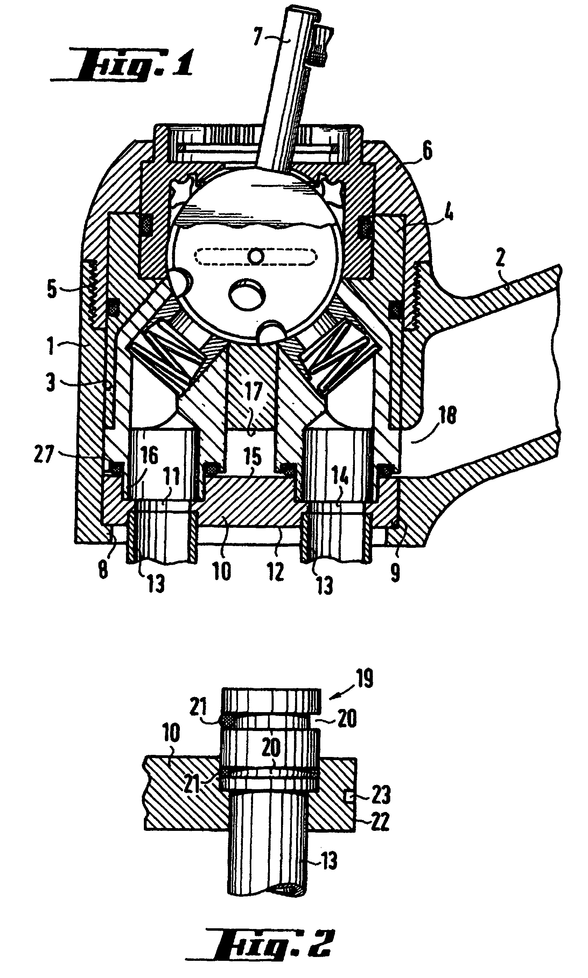

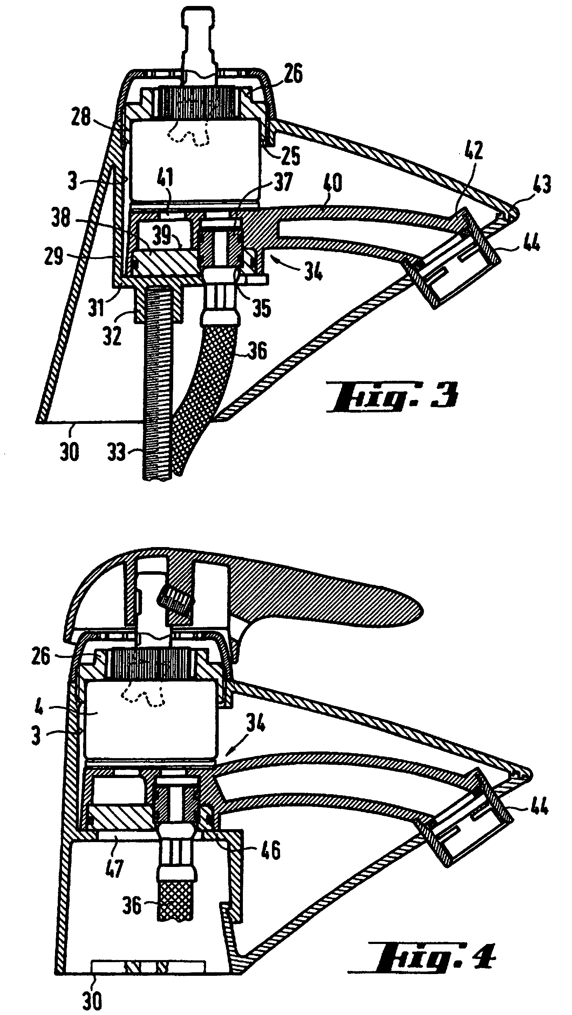

Die Figuren 1 und 2 zeigen nicht die Erfindung, dienen aber zum besseren Verständnis.
Fig. 1 zeigt vereinfacht eine Sanitärarmatur in ihren wesentlichen Teilen. Die Sanitärarmatur enthält einen Armaturengrundkörper 1, der im dargestellten Beispiel etwa zylindrisch ausgebildet ist und an seiner in Fig. 1 rechten Zylindermantelfläche einen Auslauf 2 bildet. Am nicht dargestellten Ende des Auslaufs 2 ist eine Auslauföffnung angeordnet, aus der das die Armatur verlassende Wasser austritt.

Der Armaturenkörper 1 ist innen hohl und weist einen ebenfalls zylindrischen Aufnahmeraum 3 auf, der in der dargestellten Ausführungsform im wesentlichen vollständig von einem Ventilsystem 4 ausgefüllt ist. Im Bereich seines äußeren Endes ist der Aufnahmeraum 3 des Armaturenkörpers 1 mit einem Innengewinde 5 versehen, in das eine Kappe 6 eingeschraubt ist. Die Kappe 6 legt das Mischsystem 5 in dem Armaturenkörper 1 fest. Zur Betätigung des Mischsystems weist dieses einen Schaft 7 auf, an dem ein Betätigungsgriff angebracht werden kann. Durch Betätigen des Betätigungsgriffs, nämlich einerseits durch eine Verschwenkung und andererseits durch eine Verdrehung, kann das Ventilsystem betätigt werden.

An dem Ende des Aufnahmeraumes 3 weist der Armaturenkörper 1 eine umlaufende, nur geringfügig nach innen vorspringende Rippe 8 auf. Anstelle einer umlaufenden Rippe 8 könnten auch einzelne Vorsprünge vorhanden sein. Die Rippe 8 bildet eine umlaufende, in einer Ebene liegende Schulter 9. Die Schulter 9 ist zu dem durch die Kappe 6 verschließbaren äußeren Ende des Aufnahmeraumes 3 gerichtet.

Auf die Schulter 9 ist ein Boden 10 aufgelegt, dessen Außenumfang dem Innenumfang des Aufnahmeraumes 3 entspricht. Er füllt daher den Aufnahmeraum 3 im wesentlichen vollständig aus und wird auf diese Weise in Querrichtung festgelegt.

Der Boden 10 weist zwei Durchgänge 11 auf, die auf der in Fig. 1 unteren Seite 12 des Bodens 10, d.h. auf der dem Ventilsystem 4 abgewandten Seite des Bodens 10, mit je einer Zuleitung 13 verbunden sind. Bei den Zuleitungen 13 kann es sich beispielsweise um Kupferrohre handeln, die in die Öffnungen des Bodens 10 bis zur Anlage an der Verengung 14 eingeschoben und mit dem Boden 10 verlötet sind.

Auf der dem Ventilsystem 14 zugewandten oberen Seite 15 des Bodens sind die Durchgänge 11 ringsum verbreitert. In diese verbreiterten Teile der Öffnungen greifen vorspringende zylindrische Ansätze 16 des Ventilsystems 4 ein. Die gegenüber der Endfläche des Ventilsystems 4 vorspringenden Ansätze 16 liegen auf den oberen Seiten der Verengung 13 auf. Dadurch bildet der Boden 10 auch eine Anlagefläche für das Ventilsystem 4. Die Festlegung in axialer Richtung erfolgt durch das Einschrauben der Kappe 6. Rings um die Vorsprünge 16 sind in der Endfläche des Ventilsystems 14 Ringnuten angeordnet, in denen je ein O-Ring 27 eingesetzt ist.

Die dem Boden 10 zugewandte Seite des Ventilsystems 4 enthält eine weitere Öffnung 17, die durch einen querverlaufenden Kanal mit einer seitlichen Öffnung 18 des Aufnahmeraumes in Verbindung steht, so daß das das Ventilsystem 4 verlassende Mischwasser über die Öffnungen 17 und 18 in den Auslauf 2 gelangen kann.

Das Zusammensetzen der Sanitärarmatur nach Fig. 1 geschieht derart, daß in den gegossenen Armaturenkörper 1 zunächst von oben, d.h. aus Richtung des Innengewindes 5, der mit den Zuleitungen 13 versehen Boden 10 eingesetzt wird, bis er auf der Schulter 9 zur Anlage gelangt. Anschließend wird das Ventilsystem 4 aus der gleichen Richtung eingesetzt, bis seine Ansätze 16 in die verbreiterten Durchgänge 11 eingreifen. Anschließend wird die Kappe 6 aufgesetzt und in das Innengewinde 5 eingeschraubt.

Fig. 2 zeigt in vergrößertem Maßstab eine andere Art der Durchführung einer Zuleitung durch den Boden 10.

Der Boden 10 weist wiederum einen Durchgang 11 auf, der als Stufenbohrung ausgebildet ist, wobei der Teil mit vergrößertem Durchmesser in das Innere des Aufnahmeraumes 3 gerichtet ist.

Die Zuleitung 13 weist im Bereich ihres Endes einen Nippel 19 auf. Dieser Nippel enthält einen Außendurchmesser, der dem Innendurchmesser des erweiterten Teils des Durchgangs 11 entspricht. Der Nippel 19 weist zwei umlaufende Nuten 20 auf, von denen eine Nut 20 in dem Durchgang 11 zu liegen kommt, während die zweite Nut 20 außerhalb des Bodens 10 liegt. Beide Nuten sind zur Aufnahme je eines O-Ringes 21 bestimmt.

Auch der Boden 10 weist in seiner Mantelfläche 22 eine umlaufende Nut 23 auf, in die ein O-Ring eingesetzt wird. Dieser O-Ring übernimmt die Abdichtung gegenüber dem Armaturenkörper 1.

Der Anschluß nach Fig. 2 ist dazu bestimmt, mit einem Ventilsystem 4 zusammenzuwirken, das in seiner Endfläche Vertiefungen aufweist, deren Innendurchmesser dem Außendurchmesser des Nippels 19 entspricht. Auch hier kann eine Ausrichtung zwischen dem Ventilsystem 4, dem Aramturenkörper 1 und dem Boden 10 durch dieses Eingreifen der Nippel 19 bewirkt werden.

Während bei der Ausführungsform nach Fig. 1 der Aufnahmeraum 3 im wesentlichen zylinderförmig ist und von dem Mischsystem 4 vollständig ausgefüllt wird, so daß das Mischsystem 4 durch den Aufnahmeraum insgesamt zentriert wird, ist bei der in Fig. 3 dargestellten Ausführungsform der Aufnahmeraum 3 anders gestaltet. Der Aufnahmeraum 3 bei der Ausführungsform nach Fig. 3 und 4 enthält wiederum eine nach oben gerichtete Öffnung 25, durch die das schematisch dargestellte Mischsystem 4 eingesetzt werden kann. Die Zentrierung erfolgt durch eine Einschraubkappe 26, die mit ihrem Einschraubende 28 das Ventilsystem 4 allseits umgibt.

Von dem Aufnahmeraum 3 bleibt nur eine an dem Armaturenkörper angeformte Wand 29 übrig. Diese geht in eine Querwand 31 über, die parallel zur Auflagefläche 30 des Körpers 1 verläuft. Die Querwand 31 weist einen innen mit einem Gewinde versehenen Ansatz 32 auf, in den eine Gewindestange 33 eingeschraubt ist. Diese dient zur Befestigung des Armaturenkörpers.

Auf der Oberseite der Querwand 31 liegt ein Boden 34 auf, der einen Durchgang 35 enthält. In den Durchgang 35 ist ein Zuleitungsschlauch 36 von oben eingesteckt, der im Bereich seines Endes einen dem Nippel 19 der Fig. 2 ähnlichen Nippel 37 aufweist.

Der Boden 34 ist zweiteilig aufgebaut und enthält ein erstes scheibenförmiges Teil 38. Dieses liegt flächig auf der Querwand 31 auf. Über die dem Ventilsystem 4 zugewandte obere Seite 39 des Scheibenteils 38 ragt der Nippel 37 hinaus. Mit dem scheibenförmigen Teil 38 ist der zweite Teil 40 verbunden, der den Scheibenteil 38 allseits umgibt und diesem gegenüber abgedichtet ist. Der zweite Teil 40 des Bodens 34 bildet über dem Scheibenteil 38 eine Art Haube, durch die nicht nur die Wasserzuleitung mit Hilfe des Schlauches 36 erfolgt. Auch das das Ventilsystem 4 verlassende Mischwasser gelangt durch eine Öffnung 41 in der dem Ventilsystem 4 zugewandten Endfläche des zweiten Teils 40 in diesen haubenartigen Teil und von dort aus hinter der Zeichnungsebene in das Innere der Auslaufleitung 42, die einstückig an dem oberen Teil 40 des Bodens 34 angeformt ist. Die Auslaufleitung 42 reicht bis zum Ende der Auslaufschnauze 43. Dort weist die Auslaufleitung 42 ein Auslaufmundstück 44 mit einer Belüftungseinrichtung auf. Dieses Auslaufmundstück 44 ist direkt auf die Auslaufleitung 42 aufgeschraubt.

Bei der Ausführungsform der Fig. 3 wird der Boden 34 mit dem vorher eingesetzten Zuleitungsschlauch 36 seitlich in den Aufnahmeraum 3 eingesetzt. Er bildet auch in diesem Fall eine Auflagefläche für das Ventilsystem 4.

Die Querwand 31 des Armaturenkörpers 1 enthält eine Öffnung, in der in montiertem Zustand der Anschlußschlauch zu liegen kommt. Diese Öffnung 45 ist zur Außenseite hin, d.h. in Fig. 3 nach rechts, offen. Dadurch ist es möglich, den vorkonfektionierten, mit dem Schlauch 36 versehenen Boden 34 seitlich in den Aufnahmeraum 3 einzuschieben.

Fig. 4 zeigt eine Ausführungsform, die der Ausführungsform nach Fig. 3 sehr ähnlich ist, so daß nur noch die Unterschiede dargestellt werden.

Bei der Ausführungsform nach Fig. 4 ist eine Querwand 46 vorhanden, die ebenfalls parallel zu der Auflagefläche 30 des Armaturenkörpers verläuft. Diese Querwand 46 weist eine zentrale Öffnung 47 auf, so daß um die Öffnung 47 eine umlaufende Schulter 48 gebildet ist, auf der der Boden 34 aufliegt. Zum Einsetzen des Bodens muß zunächst das in Fig. 4 nicht zu sehende untere Ende des Schlauches 36 und des zweiten nicht dargestellten Zuleitungsschlauches durch die Öffnung 47 gesteckt und dann der Boden 34 von der Seite her in den Aufnahmeraum 3 eingeführt werden. Sobald der Schlauch 36 durch die Öffnung 47 hindurch geführt ist und der Boden 34 auf der umlaufenden Schulter 48 aufliegt, kann die Befestigung über das Ventilsystem 4 und die Mutter 26 wieder in gleicher Weise erfolgen wie bei der Ausführungsform nach Fig. 3.

## Patentansprüche

1. Sanitärarmatur, mit
1.1 einem Armaturenkörper (1),
1.2 einem in diesem ausgebildeten, zur Aufnahme eines Ventilsystems (4) bestimmten Aufnahmeraum (3),
1.3 einem in den Aufnahmeraum (3) einsetzbaren Ventilsystem (4), das
1.3.1 im Bereich seiner inneren Endfläche mindestens eine Wasserdurchtrittsöffnung aufweist, sowie mit
1.4 einem der inneren Enfläche des Ventilsystems (4) zugeordneten Boden (10, 34), der
1.4.1 mindestens einen der Wasserdurchtrittsöffnung des Ventil systems (4) zugeordneten Durchgang (11, 35) aufweist,
1.4.2 als getrenntes Bauteil ausgebildet und
1.4.3 in den Aufnahmeraum (3) einsetzbar ist, sowie mit
1.5 einer zu einem Auslauf (43) der Armatur führenden Auslaufleitung (42), **dadurch gekennzeichnet, dass**
1.6 die Auslaufleitung (42) einstückig mit dem Boden (34) bzw. einem Teil (40) des Bodens (34) ausgebildet ist.

2. Sanitärarmatur nach Anspruch 1, bei der der Boden (10, 34) den Aufnahmeraum (3) abschließt.

3. Sanitärarmatur nach Anspruch 1 oder 2, bei der der Boden (10, 34) eine Auflagefläche für das Ventilsystem (4) bildet, insbesondere für dessen Endfläche.

4. Sanitärarmatur nach einem der vorhergehenden Ansprüche, bei der an dem mindestens einen Durchgang (11, 35) des Bodens (10, 34) eine Anschlussleitung anschließbar ist.

5. Sanitärarmatur nach einem der vorhergehenden Ansprüche, bei der in den Durchgang (11, 35) des Bodens (10, 34) eine mit einem Nippel (19, 37) versehene Anschlussleitung (13, 36) einsetzbar ist.

6. Sanitärarmatur nach Anspruch 5, bei der der Nippel (19) über die dem Ventilsystem (4) zugewandte Fläche (15) des Bodens (10) vorspringt und ggf. in eine Öffnung des Ventilsystems (4) eingreift.

7. Sanitärarmatur nach Anspruch 5 oder 6, bei der der Nippel (19) eine Ausrichtung des Ventilsystems (4) bewirkt.

8. Sanitärarmatur nach einem der Ansprüche 5 bis 7, bei der der Nippel (19, 37) das Ende einer Rohrleitung (13) bildet.

9. Sanitärarmatur nach einem der Ansprüche 5 bis 7, bei der der Nippel (37) das Ende eines Schlauches (36) bildet.

10. Sanitärarmatur nach einem der vorhergehenden Ansprüche, bei der der Boden (10) durch die gleiche Öffnung in den Aufnahmeraum (3) des Armaturenkörpers (1) einsetzbar ist wie das Ventilsystem (4).

11. Sanitärarmatur nach einem der Ansprüche 1 bis 9, bei der der Boden (34) seitlich in den Aufnahmeraum (3) des Armaturenkörpers (1) einsetzbar, insbesondere einschiebbar, ist.

12. Sanitärarmatur nach einem der vorhergehenden Ansprüche, bei der der Boden (34) eine Durchführung für das das Ventilsystem (4) verlassende Mischwasser aufweist.

13. Sanitärarmatur nach einem der vorhergehenden Ansprüche, bei der der Boden (34) aus zwei Teilen (38, 40) aufgebaut ist.

14. Sanitärarmatur nach einem der vorhergehenden Ansprüche, bei der die Zuleitungen (13, 36) und der Boden (10, 34) vorkonfektioniert sind.

15. Sanitärarmatur nach einem der vorhergehenden Ansprüche, bei der das Ventilsystem (4) an dem Boden (10, 34) fixierbar ist.

16. Sanitärarmatur nach einem der vorhergehenden Ansprüche, bei der der Boden (10, 34) aus Kunststoff besteht.

## Claims

1. Sanitary fitting with
1.1 a fitting body (1),
1.2 a reception space (3) constructed therein for receiving a valve system (4),
1.3 a valve system (4) insertable into the reception space (3) and which
1.3.1 has in the vicinity of its inner end face at least one water passage opening, as well as with
1.4 a base (10, 34) associated with the inner end face of the valve system (4) and which
1.4.1 has at least one passage (11, 35) associated with the water passage opening of the valve system (5),
1.4.2 is constructed as a separate component and
1.4.3 is insertable in the reception space (3), as well as with
1.5 an outflow pipe (42) leading to an outflow (43) of the fitting, **characterized in that**
1.6 the outflow pipe (42) is constructed in one piece with the base (34) or a part (40) of the base (34).

2. Sanitary fitting according to claim 1, wherein the base (10, 34) terminates the reception space (3).

3. Sanitary fitting according to claim 1 or 2, wherein the base (10, 34) forms a bearing surface for the valve system (4) and in particular for its end face.

4. Sanitary fitting according to one of the preceding claims, wherein a connecting pipe can be connected to the at least one passage (11, 35) of the base (10, 34).

5. Sanitary fitting according to one of the preceding claims, wherein a connecting pipe (13, 36) provided with a nipple (19, 37) is insertable in the passage (11, 35) of the base (10, 34).

6. Sanitary fitting according to claim 5, wherein the nipple (19) projects over the face (15) of the base (10) facing the valve system (4) and optionally engages in an opening of the valve system (4).

7. Sanitary fitting according to claim 5 or 6, wherein the nipple (19) brings about an orientation of the valve system (4).

8. Sanitary fitting according to one of the claims 5 to 7, wherein the nipple (19, 37) forms the end of a pipeline (13).

9. Sanitary fitting according to one of the claims 5 to 7, wherein the nipple (37) forms the end of a hose (36).

10. Sanitary fitting according to one of the preceding claims, wherein the base (10) can be inserted through the same opening into the reception space (3) of the fitting body (1) as the valve system (4).

11. Sanitary fitting according to one of the claims 1 to 9, wherein the base (34) is insertable and in particular can be slid laterally into the reception space (3) of the fitting body (1).

12. Sanitary fitting according to one of the preceding claims, wherein the base (34) has a passage for the mixed water leaving the valve system (4).

13. Sanitary fitting according to one of the preceding claims, wherein the base (34) is constructed from two parts (38, 40).

14. Sanitary fitting according to one of the preceding claims, wherein the supply pipes (13, 36) and the base (10, 34) are prefabricated.

15. Sanitary fitting according to one of the preceding claims, wherein the valve system (4) can be fixed to the base (10, 34).

16. Sanitary fitting according to one of the preceding claims, wherein the base (10, 34) is made from plastic.

## Revendications

1. Robinetterie sanitaire comprenant
1.1 un corps d'armature (1),
1.2 un espace de logement (3) destiné au logement d'un système de vanne (4) et ménagé dans celui-ci,
1.3 un système de vanne (4) introduisible dans l'espace de logement (3) qui
1.3.1 présente dans la zone de sa surface intérieure d'extrémité au moins une ouverture de passage d'eau, comprenant également
1.4 un fond (10, 34) associé à la surface interne d'extrémité du système de vannes (4), fond qui
1.4.1 présente au moins un passage (11, 35) associé à l'ouverture de passage d'eau du système de vanne (4),
1.4.2 qui est réalisé comme composant séparé et
1.4.3 qui est introduisible dans l'espace de logement (3), comprenant également
1.5 une conduite d'écoulement (42) allant à un écoulement (43) de la robinetterie (42), **caractérisée en ce que**
1.6 la conduite d'écoulement (42) est formée d'une seule pièce avec le fond 34 respectivement avec une partie (40) du fond (34).

2. Robinetterie sanitaire selon la revendication 1, dans laquelle le fond (10, 34) ferme l'espace de logement (3).

3. Robinetterie sanitaire selon la revendication 1 ou 2, dans laquelle le fond (10, 34) forme une surface d'application pour le système de vanne (4), en particulier pour sa surface d'extrémité.

4. Robinetterie sanitaire selon l'une des revendications précédentes, dans laquelle une conduite de raccordement peut être raccordée à au moins un passage (11, 35) du fond (10, 34).

5. Robinetterie sanitaire selon l'une des revendications précédentes, dans laquelle une conduite de raccordement (13, 36) munie d'un mamelon (19, 37) peut être introduite dans le passage (11, 35) du fond (10, 34).

6. Robinetterie sanitaire selon la revendication 5, dans laquelle le mamelon (19) fait saillie au-delà de la surface (15) tournée vers le système de vanne (4) du fond (10) et s'engage éventuellement dans une ouverture du système de vanne (4).

7. Robinetterie sanitaire selon la revendication 5 ou 6, dans laquelle le mamelon (19) provoque une orientation du système de vanne (4).

8. Robinetterie sanitaire selon l'une des revendications 5 à 7, dans laquelle le mamelon (19, 37) forme l'extrémité d'une tuyauterie (13).

9. Robinetterie sanitaire selon l'une des revendications 5 à 7, dans laquelle le mamelon (37) forme l'extrémité d'un tuyau flexible (36).

10. Robinetterie sanitaire selon l'une des revendications précédentes, dans laquelle le fond (10) est introduisible par la même ouverture que le système de vanne (4) dans l'espace de logement (3) du corps de robinetterie (1).

11. Robinetterie sanitaire selon l'une des revendications 1 à 9, dans laquelle le fond (34) peut être introduit latéralement en particulier par coulissement dans l'espace de logement (3) du corps de robinetterie (1).

12. Robinetterie sanitaire selon l'une des revendications précédentes, dans laquelle dans laquelle le fond (34) présente un passage pour l'eau mélangée quittant le système de vanne (4).

13. Robinetterie sanitaire selon l'une des revendications précédentes, dans laquelle le fond (34) est composé de deux parties (38, 40).

14. Robinetterie sanitaire selon l'une des revendications précédentes, dans laquelle les conduites d'amenée (13, 36) et le fond (10, 34) sont préconfectionnés.

15. Robinetterie sanitaire selon l'une des revendications précédentes, dans laquelle le système de vanne (4) peut être fixé sur le fond (10, 34).

16. Robinetterie sanitaire selon l'une des revendications précédentes, dans laquelle le fond (10, 34) se compose de matière plastique.
